# EUROPEAN PATENT APPLICATION

(11) **EP 1 621 959 A1**
(43) Date of publication of application: **01.02.2006**
(21) Application number: 05015695.9
(22) Date of filing: 19.07.2005
(51) Int. Cl.: G06F 1/00, H04L 29/06

(54) **Method of managing contents-using right and user equipment thereof**

(30) Priority: 28.07.2004 KR 2004059418
(71) Applicant: LG Electronics, Inc., Seoul (KR)
(72) Inventor: Lee, Jong Hee, Seoul (KR)
(74) Representative: TER MEER - STEINMEISTER & PARTNER GbR

(57) **Abstract**

A method of managing a right to use digital content and user equipment thereof is disclosed. In digital rights management (DRM), the usable period of a right to use content may be updated in case that a user wishes to extend the deadline to use the content of which usable right has expired.

## Description

This application claims the benefit of the Korean Patent Application No. 10-2004-0059418, filed on July 28, 2004, which is hereby incorporated by reference as if fully set forth herein.

### BACKGROUND OF THE INVENTION

### Field of the Invention

The present invention relates to a digital rights management, and more particularly, to a method of managing a right to use content and user equipment thereof.

### Discussion of the Related Art

Generally, communication networks, for example, a mobile communication network, provide various digital content, such as games, music, ringer sounds, video, movies, free coupons, digital lottery tickets and the like to user equipment, for example, mobile terminals.

To secure safe distribution of digital content via communication networks, and more particularly, to prevent illegal distributions and copies a digital rights management (DRM) protocol is being developed.

A goal of DRM is to manage the copyrights of digital content and to prevent illegal copying and distribution of digital content by allowing only lawful users to use the digital content.

One method of managing the right to use content is to determine or specify a period of use for specific content, referred to as the usable period. In other words, a user's right to use specific content downloaded to user equipment has a time limit.

So, if the right to use the specific content expires, the user is unable to use the content despite the fact that the content is stored in her/his user equipment.

However, if a user wishes/attempts to extend the usable period of downloaded content for which the user's right to use has expired, management methods according to the related art fail to provide means for extending the usable period.

Accordingly, if a right to use previously provided from a server expires, the user is unable to use the associated content any more, without the inconvenience of re-download the associated content from the server.

### SUMMARY OF THE INVENTION

Accordingly, the present invention is directed to a method of managing a content-using right and user equipment thereof that substantially obviates one or more problems due to limitations and disadvantages of the related art.

An advantage of the present invention is that it provides a method for managing the right to use content which provides means for updating/extending the duration of the right to use.

Additional advantages, objects, and features of the invention will be set forth in the description which follows, and in part will be apparent from the description or may be learned by practice of the invention. The objectives and other advantages of the invention will be realized and attained by the structure particularly pointed out in the written description and claims hereof as well as the appended drawings.

To achieve these objects and other advantages and in accordance with the purpose of the invention, as embodied and broadly described herein, there is provided user equipment for use in managing a right to use content, comprising: first means for requesting a condition to use the content to a server; second means for receiving condition data as a response to the request of the first means from the server; and third means for updating the condition to use the content using the condition data.

In another aspect of the present invention, there is provided user equipment in managing a right to use previously-stored content, comprising: first means for requesting an update of an expiration period for the usable right of the content to the server; second means for downloading data necessary for the update of the expiration period from the server; and third means for updating the expiration period previously set in the content using the downloaded data.

In another aspect of the present invention, there is provided a method of managing a right to use content in a user equipment, comprising: requesting by the user equipment to update at least one condition of the right to use content to a server; receiving from the server condition data in response to the request by the user equipment; and updating the at least one condition of the right to use content using the condition data.

In another aspect of the present invention, there is provided a method of managing a right to use content downloaded to a user equipment, comprising: requesting an update of an expiration period for the right to use the content to a server; downloading data necessary to update the expiration period from the server; and updating the expiration period previously set in the right to use the content using the downloaded data.

In another aspect of the present invention, there is provided a method of managing a right to use content in a user equipment, comprising: transmitting stored right to use information including a time condition to a server; receiving updated right to use information including a new time condition from the server; and updating the stored right to use information.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiment(s) of the invention and together with the description serve to explain the principle of the invention.

In the drawings:

FIG. 1 is a block diagram of a network and user equipment for the management a right to use content according to the present invention;

FIG. 2 is a flowchart of an update procedure according to a first embodiment of the present invention;

FIG. 3 is a flowchart of an update procedure according to a second embodiment of the present invention;

FIG. 4 is a flowchart of an update procedure according to a third embodiment of the present invention;

FIG. 5 is a flowchart of an update procedure according to a fourth embodiment of the present invention; and

FIG. 6 is a flowchart of an update procedure according to a fifth embodiment of the present invention.

### DETAILED DESCRIPTION OF THE INVENTION

Reference will now be made in detail to embodiments of the present invention, examples of which are illustrated in the accompanying drawings. Wherever possible, the same reference numbers will be used throughout the drawings to refer to the same or like parts.

In the present invention, it is assumed that a user equipment, for example, mobile equipment is provided with digital content from a content providing server.

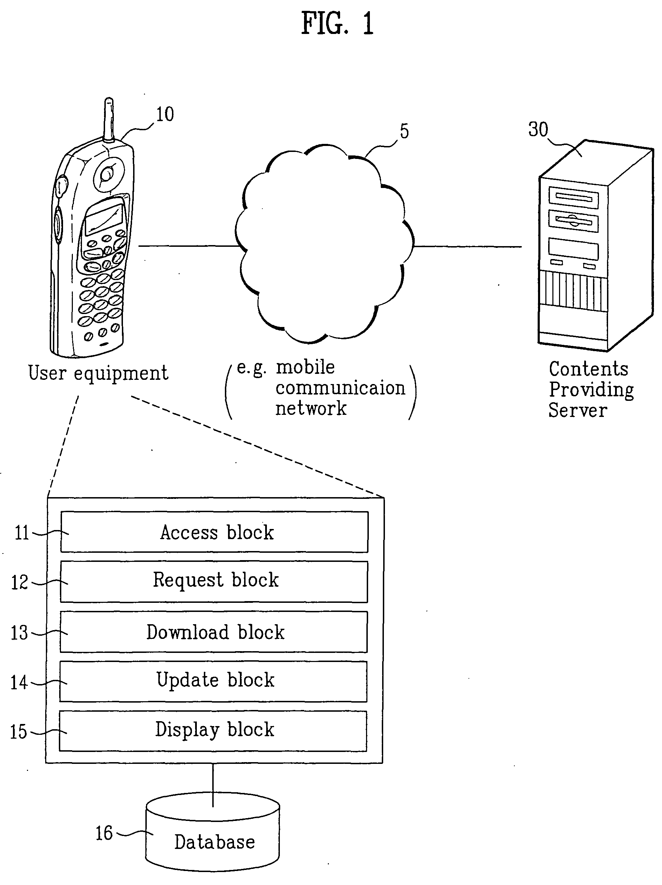

In the present invention, an overall system configuration for downloading digital content and managing a right to use digital content is shown in FIG. 1.

FIG. 1 is a block diagram of a network and user equipment for managing the right to use content according to the present invention. As shown in FIG. 1, the system includes, a communication network 5, at least one user equipment 10, and a content providing server 30. For example, the user equipment 10 and the content providing server 30 may be connected to each other via the mobile communication network 5. In this case, the user equipment 10 preferably includes a mobile equipment.

The content providing server 30 provides digital content requested by the user equipment 10. In addition, the content providing server 30 provides new use conditions for corresponding content in the event that a user requests a right to use be updated, for example, an extension of the usable period for a right to use content previously provided to the user equipment 10.

The content providing server 30 receives unique authentication information (e.g., MIN, ESN, ISMI, MEID, etc.) of the user equipment 10 from the corresponding user equipment 10 when a user requests an update of the use condition of the content.

Furthermore, the content providing server 30 receives identification information of the content, of which use condition is to be updated, from the user equipment 10.

Accordingly, the content providing server 30 generates condition data including the user-requesting use condition based on the received authentication information of the user equipment 10 and the received identification information of the content. Subsequently, the content providing server 30 downloads the generated condition data to the corresponding user equipment 10.

Meanwhile, the content providing server 30 retains a history of the content previously provided to the user equipment 10. The history indicates a usable right for certain content and a usable period or count of the corresponding content.

The content providing server 30 checks the above-explained history, and more particularly, the deadline to use the content among the use conditions of the content. If the deadline to use the content previously downloaded to the user equipment 10 expires, the content providing server 30 notifies the expiry fact to the user equipment 10.

For example, if the expiration of the usable period of content previously downloaded to the user equipment 10 is approaching, the content providing server 30 notifies the user equipment 10 that expiration of the useable period is approaching. More particularly, if the notification period is set to one day in the content providing server 30, the content providing server 30 will notify the user equipment 10 that one day remains before expiration of its right to use the associated content. Alternatively, where the duration or usable period is based on a number of uses and not time, the content providing server 30 will notify the user equipment when only one more use remains.

According to the present invention, the server providing new use conditions to the user equipment 10 is not limited to the content providing server 30. For example, a server generating the right to use the content provide new use conditions for the corresponding content to the user equipment 10. Accordingly, one skilled in the art would appreciated that one or more servers may be provided for managing the right to use content.

Referring back to FIG. 1, the user equipment 10 includes an access block 11, a request block 12, a download block 13, an update block 14, a display block 15, and a database 16.

The access block 11 establishes and sustains connections to the content providing server 30. The request block 12, in case that a user's request for using specific content further is made, sends requests to alter a right to use content to the content providing server 30. To requests the use condition of the corresponding content, the request block 12 transmits authentication information uniquely given to the user equipment 10 to the content providing server 30, and identification information for identifying the corresponding content to the content providing server 30. Upon receipt, the content providing server 30 confirms whether the request is from a valid user using the received authentication information and whether it is the request for valid content using the received identification information. The content providing server 30 bills the user equipment 10 or a user of the user equipment 10 prior to providing the condition data including the new use conditions to the user equipment 10.

If a user proposes specific use conditions, the request block 12 transmits the specific use conditions to the content providing server 30 to request new use conditions of the content. The content providing server 30 then checks the conditions to be changed by comparing the use conditions received from the user to the previous use conditions. The content providing server 30 sends a bill based on the requested change. Once the bill is paid, the content providing server 30 provides new condition data including the user specific conditions to the user equipment 10.

The download block 13 receives content provided by the content providing server 30 and condition data including the use conditions associated with the content. The download block 13 may also receive new condition data, including new use conditions for content, in a response to a request made by the request block 12 to change a right to use.

The download block 13 also receives any messages the content providing server 30 has transmitted notifying the user that a usable period for a right to use content has expired or is about to expire.

The update block 14 extracts use conditions to be applied from new condition data received via the download block 13. The update block 14 then updates the previously applied use conditions using the new use conditions.

The display block 15 outputs the content of any messages received via the download block 13. The database 16 stores the content and its associated use conditions received via the download block 13. The database 16 also stores the authentication information of the user equipment 10 and the identification information of the content. Moreover, the database 16 retains the use history of the stored content. The use history indicates the right allowed for the period or count of usability of the stored content or how long or how many times the stored content has been used.

Specifically, the user equipment 10 checks the use history of the content retained by the database 16 and the deadline to use the content among the use conditions of the content. In doing so, if there exist the content of which deadline to use the content is to expire, the user equipment 10 notifies the fact to the user via the display block 15.

For example, the user equipment 10 checks the use history of the content retained by the database 16 and the deadline to use the content among the use conditions of the content. In doing so, if the expiration of the deadline is approaching, the user equipment 10 notifies the approaching of the period expiration to the user via the display block 15. For instance, as a notification period of the period approaching set in the user equipment 10 one day, the user equipment 10 displays via the display block 15 the fact that one day is left for the period expiration at a time point prior to one day before the expiration of the deadline to use the content retained by the database 16. For another instance, as a notification count of the period approaching set in the user equipment 10 is one time, the user equipment 10 displays via the display block 15 the fact one time of a usable count is left when one time of the usable count of the content retained by the database 16 is left.

The use conditions included in the condition data of a right to use may include one or more of the following: usable period or deadline to using the content; usable count of content; usable period of content; usable cumulative time of content; range of usable user of content; and range of usable user equipment of content.

In the configuration shown in FIG. 1, it is optional for a system implementation to use a method that the server notifies the user equipment 10 by checking the history of the content and the use conditions downloaded by the server or a method that the user equipment 10 notifies a user by checking the previously downloaded use history of the content and the previously downloaded use conditions. The following description will be explained with reference to the latter method that the user equipment 10 notifies a user by checking the previously downloaded use history of the content and the previously downloaded use conditions.

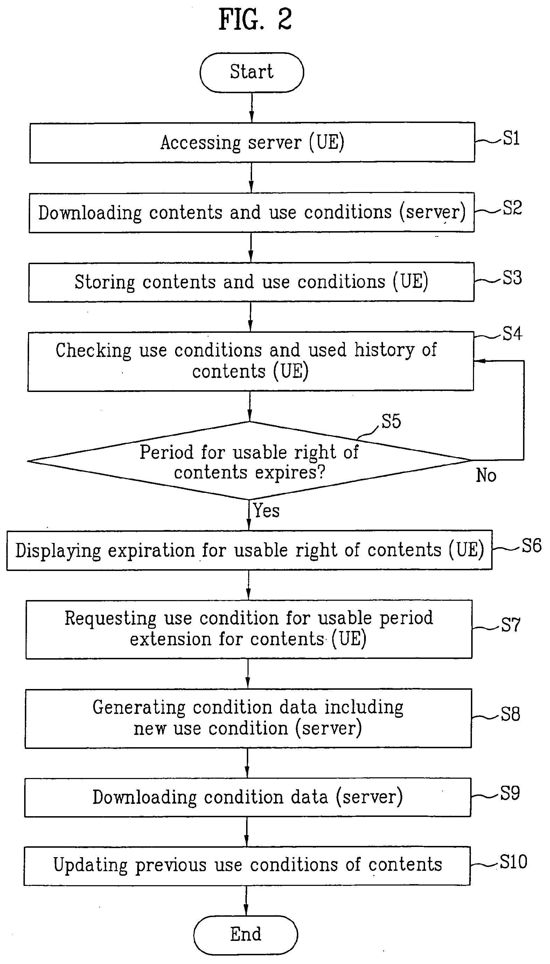

An update procedure according to a first embodiment of the invention is illustrated in the flowchart of FIG. 2. More specifically, FIG. 2 is a flowchart of an update procedure for use conditions for managing a right to use according to a first embodiment of the present invention.

Referring to FIG. 2, a user equipment accesses a server that provides content (S1). The user equipment downloads specific content from the server (S2), and stores the downloaded content in a database.

Hence, a user can use the content stored in the database. In addition to the downloaded content, the user equipment receives condition data including use conditions for the downloaded content(S2). The user equipment links the content and the received condition data to each other to store in the database (S3).

Subsequently, the user equipment checks the use conditions and use history of the stored content (S4). As a result of the check, if an expiration period for a right to use the content (e.g., usable period or usable count) has expired (S5), the user equipment displays via the display block that the usable right of the content has expired (S6).

If an notification period or count of an expiry period approaching is set in the user equipment, in case that the period for the usable right of the content is approaching to the set period or count, the user equipment displays via the display block that the expiry period for the usable right of the content is approaching.

If a user attempts to extend the deadline to use the content by operating the user equipment, the user equipment sends a request to extend or change the use conditions for the content to the server (S7).

In doing so, the user equipment transmits unique authentication information, for example, MIN, ESN, ISMI, MEID, and the like, of the user equipment and/or identification information of the content of which deadline to use will be extended to the server. The user equipment may also transmits user-specific use conditions to the server.

Accordingly, the server generates new condition data including the use conditions according to the user's request based on the authentication information of the user equipment and the identification information of the content (S8). The server performs a billing corresponding to the extension of the usable period. Once the bill is paid, the server downloads the new condition data according to the user's request to the user equipment (S9).

The user equipment receives the new condition data from the server and updates the previous use conditions for the corresponding content using the received condition data (S10). The use conditions for the right to use the content may include at least one of deadline of content (i.e., expiry period of a right to use content), usable count of content, usable period of content, usable cumulative time of content, range of usable user of content and range of usable user equipment of content.

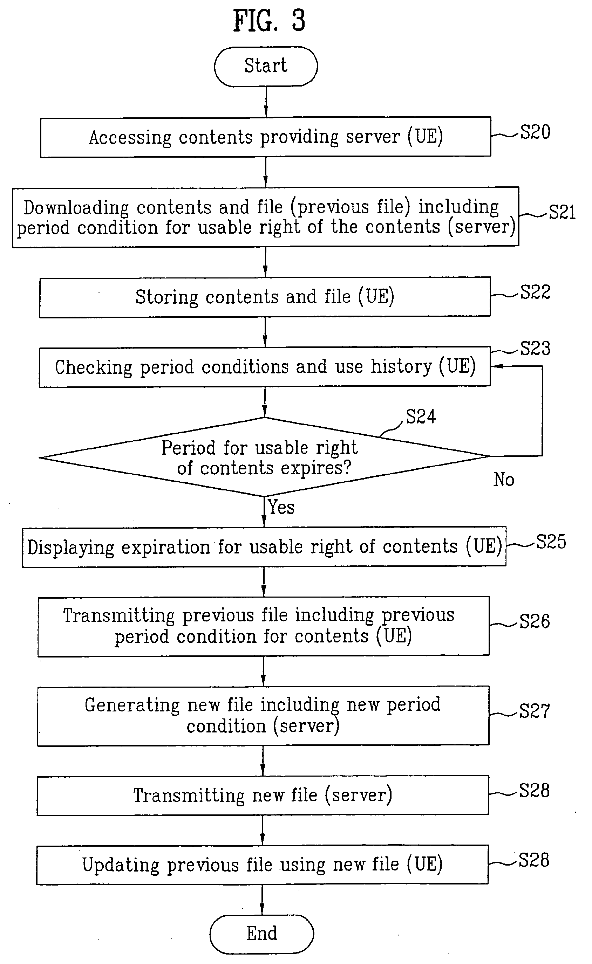

FIG. 3 is a flowchart of an update procedure according to a second embodiment of the present invention. Referring to FIG. 3, a user equipment accesses a server that provides content (S20). The user equipment downloads the specific content along with a file (hereinafter referred to as a previous file for convenience of explanation) including period conditions for a right to use the content from the server (S21).

The user equipment then stores the downloaded content and the previous file in a database (S22). Hence, a user can use the content stored in the database. Subsequently, the user equipment checks the history of the stored content having been used by the user and the period conditions included in the previous file (S23). As a result of the check, if an expiration period for the right to use the content (e.g., usable period or usable count) has expired (S24), the user equipment displays via the display block that the right to use of the content has expired (S25).

If the user wishes to extend the usable period of the content, the user may request a change by operating the user equipment. More specifically, the user equipment transmits the previous file including a usable period condition and a request to extend the usable period of the content to the server (S26).

In this case, the previous file includes unique authentication information (e.g., MIN, ESN, ISMI, MEID, etc.) of the user equipment and/or identification information of the content of which deadline will be extended. And, the previous file further includes user-specific use conditions.

The server generates a new file including a new period condition according to the user's request (S27). It is a matter of course that the server performs a billing corresponding to the extension of the usable period.

Once the bill is paid, the server transmits the generated new file to the user equipment in response to the user's request (S28).

The user equipment receives the new file from the server and then updates the stored previous file using the received new file (S29).

In doing so, the period conditions, which are included in the file, for the usable right of the content include at least one of deadline of content (i.e., expiry period of a right to use content), usable count of content, usable period of content and usable cumulative time of content.

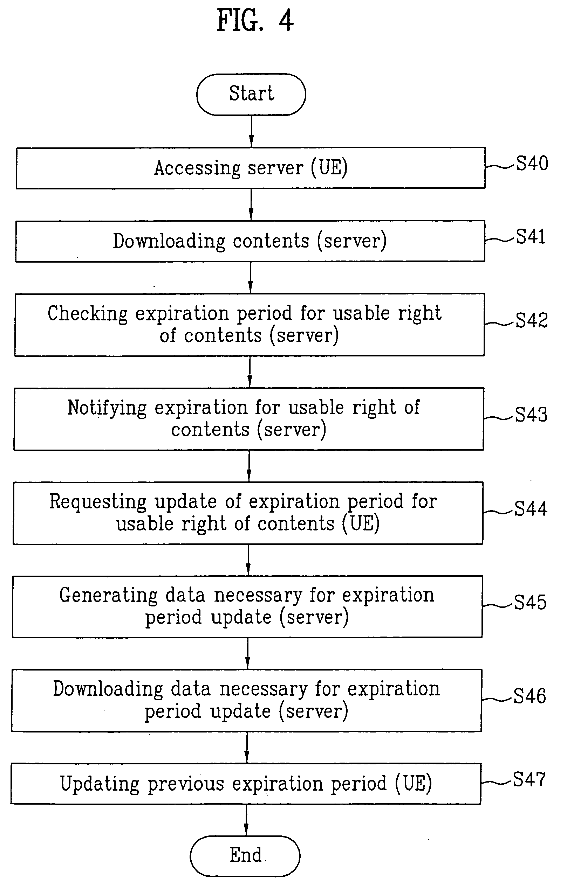

FIG. 4 is a flowchart of an update procedure according to a third embodiment of the present invention. Referring to FIG. 4, a user equipment accesses a server that provides content (S40). The user equipment downloads and stores specific content from the server (S41). Hence, a user can use the content stored in the database. In addition, a period for the right to use the downloaded content is provided with the downloaded content.

The server checks the usable period of the content to determine when the right to use the downloaded content will expire (S42). As a result of the check, if the expiration period for the right to use the content (e.g., usable period or usable count) has expired, the server notifies the user equipment that the right to use the content has expired (S43).

Alternatively, if the expiration period has not expired but is within a predetermine period, the server notifies the user equipment that the expiration period for the right to use the content is approaching.

If a user wishes to extend the usable period, the user may do so by operating the user equipment. More particularly, the user equipment requests an update of the expiration or usable period for the right to use the content to the server (S44).

In doing so, the user equipment provides unique authentication information (e.g., MIN, ESN, ISMI, MEID, etc.) of the user equipment and/or identification information of the content of which deadline to use will be extended to the server. The user equipment further provides a user-specific expiry period to the server.

Accordingly, the server generates the data necessary to update the expiration period according to the user's request based on the authentication information of the user equipment and the identification information of the content (S45).

As the server transmits the generated data to the user equipment, the user equipment downloads the data from the server (S46). The user equipment then updates the expiration period previously set in the right to use the content using the downloaded data (S47). Namely, the user equipment changes the expiration period previously set in the content to the new expiration period with reference to the received data.

In this case, the expiration period for the right to use the content includes at least one of usable count of content, usable period of content, usable count of content within a prescribed period and usable cumulative time of content.

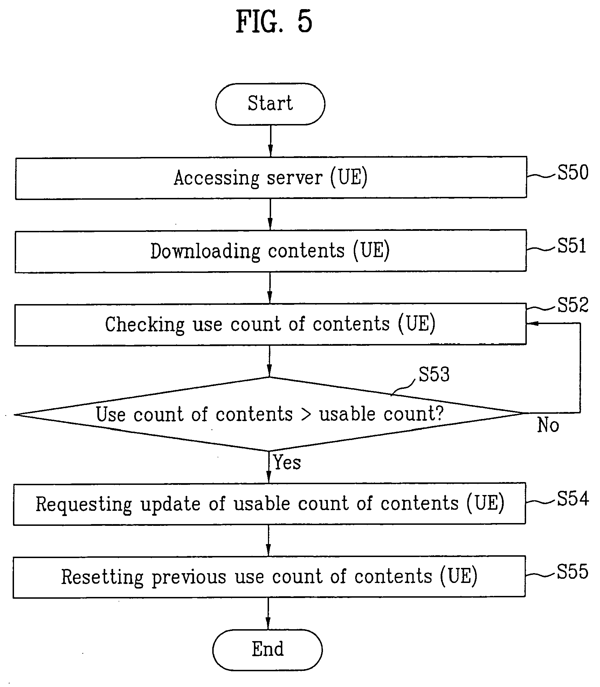

FIG. 5 is a flowchart of an update procedure according to a fourth embodiment of the present invention. Referring to FIG. 5, a user equipment accesses a server that provides content (S50). The user equipment downloads and stores the specific content from the server (S51). Hence, a user can use the content stored in the database. In addition, a count enabling a user to use the content is set in the content. The count is referred to as the usable count of the content.

Subsequently, the user equipment checks the usable count of the stored content (S52). As a result of the check, if the count of using the content exceeds the set usable count (S53), the user equipment displays via the display block that the usable right of the content has expired.

If a user wishes to extend the usable count of the content, they may do so by operating the user equipment. More particularly, the user equipment requests an update of the usable count for the content to the server (S54).

In doing so, the user equipment transmits unique authentication information (e.g., MIN, ESN, ISMI, MEID, etc.) of the user equipment and/or identification information of the content of which usable count will be updated to the server. The user equipment further transmits a user-specific usable count to the server.

Accordingly, the server generates the data necessary to update the usable count of the corresponding content based on the authentication information of the user equipment and the identification information of the content and then transmits the generated data to the user equipment.

The user equipment updates the usable count previously set in the corresponding content to the new usable count using the data received from the server and resets the previous use count that is a history of using the content previously (S55).

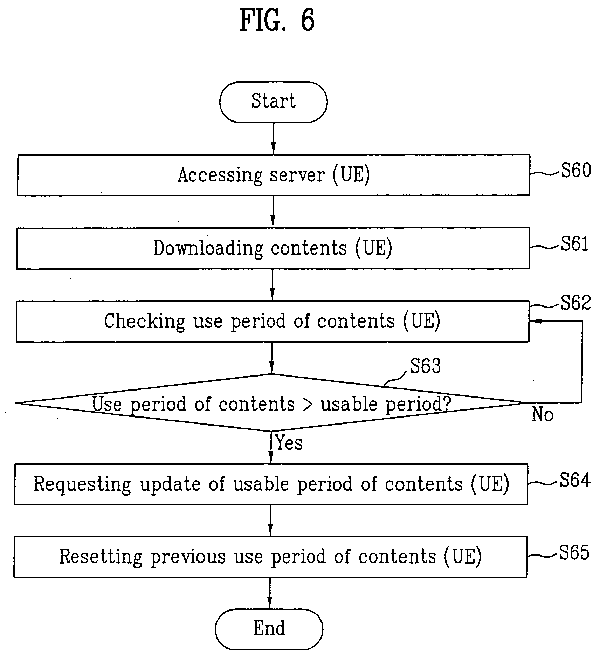

FIG. 6 is a flowchart of an update procedure according to a fifth embodiment of the present invention. Referring to FIG. 6, a user equipment accesses a server that provides content (S60). The user equipment downloads and stores specific content from the server (S61). Hence, a user can use the content stored in the database. In addition, the usable period, i.e., the period for a user is enabled to use the content, is set in the content.

Subsequently, the user equipment checks the usable period of the stored content (S62). As a result of the check, if the usable period of the content exceeds the usable period set in the content (S63), the user equipment displays via a display block that the right to use the content has expired.

If a user wishes to extend the usable period of the content, they may do so by operating the user equipment. More particularly, the user equipment requests an update of the usable period for the content to the server (S64).

In doing so, the user equipment transmits unique authentication information (e.g., MIN, ESN, ISMI, MEID, etc.) of the user equipment and/or identification information of the content of which usable count will be updated to the server. The user equipment further transmits a user-specific usable period to the server.

Accordingly, the server generates the data necessary to update the usable period of the corresponding content based on the authentication information of the user equipment and the identification information of the content and then transmits the generated data to the user equipment.

The user equipment updates the previously set usable period with the new usable period using the data received from the server and resets the history of using the content previously recorded (S65).

Accordingly, the present invention provides the following effects or advantages. First of all, if a user wishes to extend a right to use that has expired it is unnecessary to re-download the corresponding content from the server.

Namely, in the present invention, by downloading the data needed to update the period for the usable right of the content only instead of re-downloading the content previously provided from the server, a user able to extend the usable right of the content that has expired.

Therefore, since the content need not to be re-downloaded in case of the expiration of the usable right, the present invention can reduce the transmission loads between the server and the user equipment.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A user equipment for use in managing a right to use content, comprising:
first means for requesting a condition to use the content to a server;
second means for receiving condition data as a response to the request of the first means from the server; and
third means for updating the condition to use the content using the condition data.

2. The user equipment of claim 1, wherein the first means transmits authentication information of the user equipment to the server.

3. The user equipment of claim 1, wherein the first means transmits identification information of the content to the server.

4. The user equipment of claim 1, wherein the condition data includes a deadline to use the content.

5. The user equipment of claim 1, wherein the condition data includes a usable count of the content.

6. The user equipment of claim 1, wherein the condition data includes a usable period of the content.

7. The user equipment of claim 1, wherein the condition data includes a usable cumulative time of the content.

8. A user equipment in managing a right to use previously-stored content, comprising:
first means for requesting an update of an expiration period for the usable right of the content to the server;
second means for downloading data necessary for the update of the expiration period from the server; and
third means for updating the expiration period previously set in the content using the downloaded data.

9. The user equipment of claim 8, further comprising a fourth means for receiving a message notifying a period expiration for the right to use the content, and for outputting information of the received message.

10. The user equipment of claim 9, wherein the fourth means receives a message notifying a period of expiration is approaching for the right to use the content and outputs information of the received message.

11. The user equipment of claim 8, wherein the second means transmits at least one of authentication information of the user equipment and identification information of the content to the server and wherein the authentication information and the identification information are needed to request the update of the expiration period.

12. The user equipment of claim 11, wherein if a user requests a specific expiration period, the second means further transmits the user-requesting expiration period to the server.

13. The user equipment of claim 8, wherein the expiration period is either a usable count of the content or a usable period of the content.

14. The user equipment of claim 8, wherein the expiration period is a count enabling a use of the content within a prescribed period.

15. The user equipment of claim 8, wherein the expiration period is a cumulative value of usable time of the content.

16. A method of managing a right to use content in a user equipment, comprising:
requesting by the user equipment to update at least one condition of the right to use content to a server;
receiving from the server condition data in response to the request by the user equipment; and
updating the at least one condition of the right to use content using the condition data.

17. The method of claim 16, wherein in requesting the condition to use the content, authentication information of the user equipment is transmitted to the server.

18. The method of claim 16, wherein in requesting to update at least one condition of the right to use content, identification information of the content is transmitted to the server.

19. The method of claim 16, wherein the condition data includes a deadline to use the content.

20. The method of claim 16, wherein the condition data includes a usable count of the content.

21. The method of claim 16, wherein the condition data includes a usable period of the content.

22. The method of claim 16, wherein the condition data includes a usable cumulative time of the content.

23. The method of claim 16, wherein the condition data includes a usable user range of the content.

24. The method of claim 16, wherein the condition data includes a usable user equipment range of the content.

25. A method of managing a right to use content downloaded to a user equipment, comprising:
requesting an update of an expiration period for the right to use the content to a server;
downloading data necessary to update the expiration period from the server; and
updating the expiration period previously set in the right to use the content using the downloaded data.

26. The method of claim 25, further comprising:
notifying the user equipment that the right to use has expired from the server, if the period for the right to use the content expires.

27. The method of claim 25, further comprising:
notifying the user equipment before an expiration period of the right to use the content that expiration of the right to use is approaching from the server.

28. The method of claim 25, wherein in requesting the update of the expiration period, authentication information of the user equipment is transmitted to the server.

29. The method of claim 25, wherein in requesting the update of the expiration period, identification information of the content is transmitted to the server.

30. The method of claim 25, wherein in requesting the update of the expiration period, a user-specific expiration period is transmitted to the server.

31. The method of claim 25, wherein in updating the expiration period, the user equipment changes the expiration period into a new expiration period with reference to the data.

32. The method of claim 25, wherein the expiration period is either a usable count of the content or a usable period of the content.

33. The method of claim 25, wherein the expiration period is a count enabling a use of the content within a prescribed period.

34. The method of claim 25, wherein the expiration period is a cumulative value of usable time of the content.

35. A method of managing a right to use content in a user equipment, comprising:
transmitting stored right to use information including a time condition to a server;
receiving updated right to use information including a new time condition from the server; and
updating the stored right to use information.

36. The method of claim 35, wherein updating the stored right to use information replaces the stored right to use information with the new right to use information.

37. The method of claim 35, wherein the stored right to use information includes authentication information of the user equipment.

38. The method of claim 35, wherein the stored right to use information includes identification information of the content.

39. The method of claim 35, wherein the stored right to use information includes a user-specific period condition.

40. The method of claim 35, wherein the stored right to use information includes either a usable count of the content or a usable period of the content.

41. The method of claim 35, wherein the stored right to use information includes a count enabling a use of the content within a prescribed period.

42. The method of claim 35, wherein the stored right to use information includes a cumulative value of usable time of the content.
